# EUROPÄISCHE PATENTSCHRIFT

(11) **EP 1 063 078 B1**
(45) Veröffentlichungstag und Bekanntmachung des Hinweises auf die Patenterteilung: **29.01.2003**
(21) Anmeldenummer: 00112335.5
(22) Anmeldetag: 09.06.2000
(51) Int. Cl.: B29C 65/00, B29C 45/16, F16L 41/00, B60K 15/035

(54) **Verfahren zur Herstellung eines Stutzens**
Process for making a branch stub
Procédé de fabrication d'un embout

(30) Priorität: 21.06.1999 DE 19928345; 09.11.1999 DE 19953746
(43) Veröffentlichungstag der Anmeldung: 27.12.2000
(73) Patentinhaber: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(56) Entgegenhaltungen:
- DE-A- 19 548 188
- DE-A- 19 912 438
- DE-C- 4 239 909
- DE-C- 19 535 413
- DE-C- 19 617 349
- US-A- 5 065 782
- US-A- 5 605 175
- US-A- 5 618 599
- PATENT ABSTRACTS OF JAPAN vol. 010, no. 231 (M-506), 12. August 1986 (1986-08-12) & JP 61 063426 A (SANYO KOKUSAKU PULP CO LTD), 1. April 1986 (1986-04-01)
- PATENT ABSTRACTS OF JAPAN vol. 008, no. 116 (M-299), 30. Mai 1984 (1984-05-30) & JP 59 023759 A (AISHIN SEIKI KK), 7. Februar 1984 (1984-02-07)

## Beschreibung

Die Erfindung bezieht sich auf Verfahren zur Herstellung eines Stutzens aus unterschiedlichen Teilen zum Verbinden einer Fluidleitung mit einer Öffnung eines Bauteils, das thermoplastischen Kunststoff aufweist, wobei ein erster Teil des Stutzens aus im wesentlichen thermoplastischem Kunststoff geformt wird, wobei ein zweiter Teil und ein dritter Teil des Stutzens aus jeweils im wesentlichen thermoplastischem Kunststoff geformt und dabei miteinander verschweißt werden, wobei der erste Teil und der zweite Teil miteinander fluiddicht verbunden werden und wobei das Material des dritten Teils so gewählt wird, daß es auch mit dem Material des Bauteils eine Schweißverbindung eingeht.

Ferner bezieht sich die Erfindung auf ein Verfahren zur Herstellung eines Stutzens aus im wesentlichen thermoplastischem Kunststoff zum Verbinden einer Fluidleitung mit einer Öffnung eines Bauteils, das thermoplastischen Kunststoff aufweist.

Bei einem bekannten Verfahren der zuerst erwähnten Art, das aus der deutschen Patentschrift DE 195 35 413 C1 oder der deutschen Patentschrift DE 42 39 909 C1 bekannt ist, werden der erste und der zweite Teil durch Anspritzen beziehungsweise Umspritzen in demselben Formwerkzeug miteinander verbunden. Der erste Teil, auf dem normalerweise die Fluidleitung, zum Beispiel ein Gummischlauch oder eine biegsame Kunststoffleitung, befestigt wird, kann jedoch die unterschiedlichsten Formen aufweisen. Beispielsweise kann der erste Teil, je nach Anwendung des Stutzens, ein gerades oder ein unter den verschiedensten Winkeln abgewinkeltes mit unterschiedlich geformten Halterippen in unterschiedlicher Anzahl versehenes Rohrstück sein. Dagegen können der zweite und der Dritte Teil unabhängig von der Form des ersten Teils, stets die gleiche Form haben. Entsprechend der jeweiligen Form des ersten Teils müssen daher unterschiedliche Formwerkzeuge hergestellt werden. Dies ist aufwendig.

Bei dem zweiten, aus der DE 195 48 188 A1 bekannten Verfahren ist der Stutzen einteilig ausgebildet und einstückig mit dem Behälter geformt. Er erfüllt daher allenfalls die an den Behälter gestellten Anforderungen. Er kann jedoch höheren Belastungen ausgesetzt sein, zum Beispiel einer erheblichen Flächenpressung beim Festspannen eines Schlauches auf dem Rohrstutzen, so daß er sich im Laufe der Zeit, insbesondere bei höheren Temperaturen, bleibend verformt. Die einstückige Ausbildung des Stutzens mit dem Behälter erfordert darüber hinaus ein aufwendiges Formwerkzeug.

Der Erfindung liegt die Aufgabe zugrunde, Verfahren der eingangs genannten Art anzugeben, die die Herstellung des Stutzens vereinfachen.

Erfindungsgemäß besteht eine erste Lösung dieser Aufgabe bei dem zuerst erwähnten gattungsgemäßen Verfahren darin, daß der erste Teil und der zweite Teil des Stutzens außerhalb eines Formwerkzeugs miteinander verbunden werden.

Bei dieser Lösung können der erste Teil in einem eigenen Formwerkzeug und der zweite und dritte Teil in einem gemeinsamen Formwerkzeug hergestellt werden. Für die unterschiedlichen Formen des ersten Teils braucht dann jeweils nur das für den ersten Teil vorgesehene Formwerkzeug unterschiedlich ausgebildet zu werden. Das für den zweiten und dritten Teil gemeinsam verwendete Formwerkzeug kann dagegen für die meisten Anwendungsfälle, in denen sich nur die Form des ersten Teils ändert, unverändert bleiben. Auf diese Weise werden die Formwerkzeugkosten erheblich verringert.

Der erste und der zweite Teil können dann stoffschlüssig, zum Beispiel durch Schweißen, verbunden werden. Das Verbinden durch Schweißen kann durch Spiegelschweißen, Ultraschallschweißen oder Rotationsschweißen erfolgen.

Alternativ können der erste und der zweite Teil formschlüssig verbunden werden, zum Beispiel durch eine Schnapp-, Bajonett- oder Schraubverbindung.

Sowohl zum Herstellen der Schweißverbindung als auch der formschlüssigen Verbindung können die zu verbindenden Flächen des ersten und des zweiten Teils vor dem Verbinden profiliert werden, so daß sie ineinandergreifen.

Um die Verbindung des ersten und zweiten Teils möglichst dicht auszubilden, kann in einer Ebene zwischen den zu verbindenden Flächen des ersten und des zweiten Teils eine Dichtung vorgesehen werden.

Ferner kann der zweite Teil durch den dritten Teil, bis über dessen dem Bauteil zugekehrte Seite hinaus, durchgehend geformt werden. Der zweite Teil kann dann zum Verbinden des Stutzens mit dem erwähnten Bauteil in dessen Öffnung zur Zentrierung des Stutzens relativ zur Öffnung eingeführt werden. Außerdem kann der zweite Teil gleichzeitig den dritten Teil durch entsprechende Wahl des Materials des zweiten Teils gegen irgendwelche Belastungen, zum Beispiel vor Korrosion und/oder Diffusion durch das hindurchgeleitete Fluid, wie Kraftstoff oder Öl eines Verbrennungsmotors, geschützt werden.

Vorzugsweise werden wenigstens der zweite Teil und der dritte Teil diffusionsdicht ausgebildet.

Sodann kann der erste Teil mit wenigstens einer Schicht versehen werden und der erste Teil und die Schicht(en) aus Materialien mit unterschiedlichen Eigenschaften, insbesondere hinsichtlich ihrer Festigkeit, Schlagzähigkeit und Kriechneigung, hergestellt werden, wobei der erste Teil und/oder die Schichten oder eine der Schichten diffusionsdicht ausgebildet werden. Hierbei ist man weitgehend frei in der Wahl des thermoplastischen Kunststoffs des ersten Teils. Beispielsweise kann er so gewählt werden, daß er sich auf einfache Weise mit dem Material des zweiten Teils verschweißen läßt. Zweckmäßigerweise können dann die Kunststoffe des ersten und des zweiten Teils aus dem gleichen Material bestehen. Dagegen kann dann das Material der zusätzlichen Schicht oder Schichten den unterschiedlichsten Anforderungen an die Kombination aus dem ersten Teil und der Schicht beziehungsweise den Schichten, wie Festigkeit, Schlagzähigkeit und Kriechneigung oder Diffusionsdichtigkeit, angepaßt werden.

So kann der erste Teil mit wenigstens einer Schicht aus Metall versehen werden. Metall ergibt eine hohe Diffusionsdichtigkeit.

Alternativ ist es möglich, daß wenigstens die eine Schicht Kunststoff aufweist und der erste Teil und/oder wenigstens die eine Schicht mit einer Verstärkung versehen wird (werden).

Sodann ist es möglich, daß die Schichten auf der Innenseite des ersten Teils und bis über die axiale Länge des zweiten und dritten Teils hinaus auch auf der Innenseite des zweiten Teils ausgebildet wird (werden). Auf diese Weise können auch der zweite und dritte Teil durch die Schicht oder Schichten bei entsprechender Wahl des Materials der Schicht oder Schichten geschützt werden.

Vorzugsweise werden der zweite und der dritte Teil rotationssymmetrisch in einem gemeinsamen Werkzeug gespritzt. Die Rotationssymmetrie ermöglicht die Ausbildung eines einfachen Werkzeugs.

Sodann ist es günstig, wenn der erste Teil und die weiteren Schichten im Mehrkomponenten-Spritzgußverfahren oder im Sandwich-Spritzgußverfahren hergestellt werden. Dies ergibt ebenfalls ein einfaches Formwerkzeug zur Herstellung des ersten Teils und der weiteren Schichten.

Eine vorteilhafte Weiterbildung kann darin bestehen, daß der dritte Teil auf seiner dem zweiten Teil abgekehrten Seite mit einem vierten Teil verschweißt wird, der thermoplastischen Kunststoff aufweist, der mit dem des Bauteils eine Schweißverbindung eingeht und eine höhere Spannungsrißbeständigkeit als der dritte Teil hat. Da das Bauteil, an dem der Stutzen angeschweißt wird, zum Beispiel ein Kraftfahrzeug-Kraftstofftank, in der Regel einen Kunststoff mit hoher Spannungsrißbeständigkeit aufweist, wird auf diese Weise sichergestellt, daß eine höhere Spannungsbelastung des Bauteils nicht zum Lösen der Schweißverbindung zwischen Stutzen und Bauteil und nicht zu einem Spannungsriß im Stutzen führt.

Hierbei kann das Material des vierten Teils eine höhere Dichte und Viskosität als das des dritten Teils haben.

Eine zweite Lösung der Aufgabe bei dem zweiten gattungsgemäßen Verfahren besteht erfindungsgemäß darin, daß der Stutzen aus einem äußeren Teil, einer inneren Schicht und einer Zwischenschicht im Spritzgußverfahren hergestellt wird, wobei der äußere Teil und die innere Schicht einerseits und die Zwischenschicht andererseits aus Materialien mit unterschiedlichen Eigenschaften, insbesondere hinsichtlich ihrer Festigkeit, Schlagzähigkeit und Kriechneigung, hergestellt werden und der äußere Teil und/oder wenigstens eine der Schichten diffusionsdicht ausgebildet wird bzw. werden. Bei dieser Lösung ist auch ein Rohrstutzen mit komplizierter Form auf einfache Weise herstellbar, wobei die Materialien des äußeren Teils und der auf seiner Innenseite liegenden Schicht und/oder Schichten so gewählt werden können, daß der Stutzen allen an ihn gestellten Anforderungen genügt.

Hierbei ist das Spritzgußverfahren vorzugsweise ein Sandwich-, Monosandwich-, Gegentakt- oder Koinjektions-Spritzgußverfahren.

Eine weitere Zwischenschicht zwischen dem ersten Teil und der inneren Schicht kann z.B. als Haftvermittler ausgebildet werden.

Die Erfindung und ihre Weiterbildungen werden nachstehend anhand der beigefügten Zeichnungen bevorzugter Ausführungsbeispiele näher beschrieben. Es zeigen:
- Fig. 1: einen Axialschnitt durch ein erstes Ausführungsbeispiels eines erfindungsgemäßen Stutzens, bevor der erste Teil mit dem bereits mit dem dritten Teil verschweißten zweiten Teil verbunden wird, sowie einen Ausschnitt aus einem Bauteil in Form eines Behälters im Bereich einer Öffnung, an deren Rand der Stutzen nach seiner Fertigstellung angeschweißt wird, um den Behälter mit einer Fluidleitung zu verbinden,
- Fig. 2: ein zweites Ausführungsbeispiel eines erfindungsgemäßen Stutzens im Axialschnitt, nachdem der erste Teil mit einer inneren Schicht verbunden und der zweite und dritte Teil miteinander verschweißt wurden, wobei der erste und zweite Teil noch nicht miteinander verbunden sind,
- Fig. 3: einen Axialschnitt eines dritten Ausführungsbeispiels eines erfindungsgemäßen Stutzens, der gegenüber dem nach Fig. 2 geringfügig abgewandelt ist, jedoch im gleichen Zustand der Herstellung,
- Fig. 4: eine viertes Ausführungsbeispiel eines erfindungsgemäßen Stutzens, das gegenüber dem nach Fig. 3 geringfügig abgewandelt ist und die gleiche Herstellungsphase darstellt,
- Fig. 5: ein fünftes Ausführungsbeispiel eines erfindungsgemäßen Stutzens, das gegenüber dem nach Fig. 3 durch die Ergänzung einer weiteren Schicht im ersten Teil abgewandelt ist, und
- Fig. 6: ein sechstes Ausführungsbeispiel eines erfindungsgemäßen Stutzens, das gegenüber den Ausführungsbeispielen nach den Fig. 1 bis 5 mit einem vierten Teil verschweißt ist.

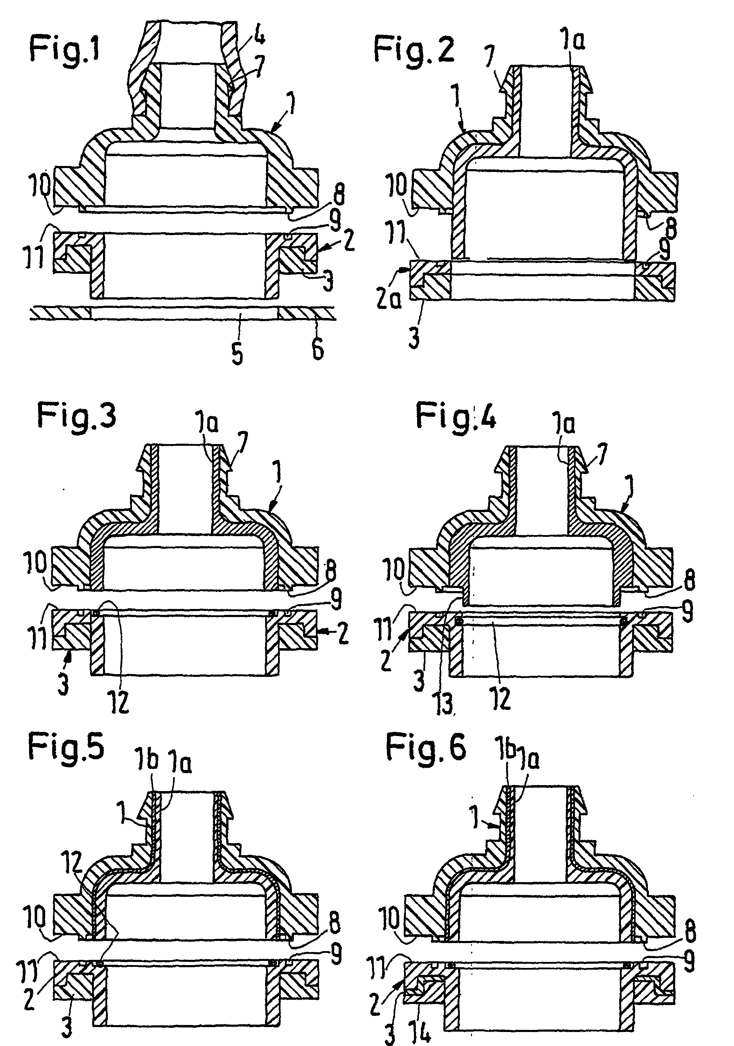

Der Stutzen nach Fig. 1 besteht aus drei unterschiedlichen Teilen 1, 2 und 3 und dient zum Verbinden einer Fluidleitung 4 mit einer Öffnung 5 eines Bauteils 6, das im wesentlichen thermoplastischen Kunststoff aufweist, hier eines Kraftstofftanks eines Kraftfahrzeugs.

Der Teil 1 besteht im wesentlichen aus thermoplastischen Kunststoff und wird in einer eigenen Form im Spritzgußverfahren geformt. Die Teile 2 und 3 bestehen ebenfalls im wesentlichen aus thermoplastischen Kunststoffen und werden in einem zweiten Formwerkzeug im Mehrkomponenten-Spritzgußverfahren geformt und dabei gleichzeitig mit einander verschweißt. Zu diesem Zweck sind die Kunststoffe der beiden Teile 2 und 3 so gewählt, daß sie miteinander verschweißbar sind. Das Material des Teils 3 ist darüber hinaus so gewählt, daß es auch mit dem Kunststoff des Bauteils 6, der überwiegend aus HDPE besteht, verschweißbar ist.

Beispielsweise kann das Material des Teils 2 aus der Gruppe der Materialien PA, PBT, PBN, POM, PPS, aliphatisches Polyketon, PVDF, PE oder PP ausgewählt werden. Das Material des Teils 3 kann aus der Gruppe der Materialien PBT, PBN, POM, PPS, aliphatisches Polyketon, PVDF, PE, zum Beispiel HDPE, PP, TEEE, PA und TPE, ausgewählt werden. Die Materialien beider Teile 2 und 3 können jeweils mit Fasern, zum Beispiel Glasfasern, Kohlefasern oder Metallfasern, verstärkt oder unverstärkt sein.

Der Kunststoff des Teils 1 kann mit dem des Teils 2 übereinstimmen, oder die Kunststoffe der beiden Teile 1 und 2 können unterschiedlich gewählt sein, wobei sie miteinander verschweißbar und/oder formschlüssig verbindbar sind.

Der Teil 1 kann zumindest in seinem dem Teil 2 abgekehrten Abschnitt die unterschiedlichsten Formen aufweisen. Beispielsweise kann der mit der Fluidleitung 4 zu verbindende Abschnitt, je nach Anwendung des Rohrstutzens, geradlinig, wie dargestellt, oder abgewinkelt sein, zum Beispiel im Winkel von 90°, unterschiedlich lang, unterschiedlich dick und/oder mit einer unterschiedlichen Anzahl von Halterippen für die Fluidleitung 4 versehen sein. Im dargestellten Beispiel ist der mit der Fluidleitung 4 zu verbindende Abschnitt des Teils 1 mit nur einer Halterippe 7 versehen.

Die Teile 2 und 3 haben dagegen in aller Regel die gleiche rotationssymmetrische Form, wie sie in Fig. 1 dargestellt ist.

Um die Teile 1, 2 und 3 zu formen, braucht daher nur für den Teil 1 das Formwerkzeug ggf. unterschiedlich ausgebildet zu werden, während zur Formung der Teile 2 und 3 stets das gleiche Formwerkzeug verwendet werden kann, in dem sie auch miteinander an ihren Grenzflächen durch Verschmelzung verschweißt werden.

Nach der Herstellung des Teils 1 einerseits und dem aus den Teilen 2 und 3 bestehenden Ring werden die Teile 1 und 2 miteinander verschweißt, zum Beispiel durch Spiegelschweißen, Ultraschallschweißen oder Rotationsschweißen (Reibschweißen), wobei eine Profilierung 8 in Form einer ringförmigen Rippe auf der mit dem Teil 2 zu verschweißenden Fläche des Teils 1 mit einer zu der Profilierung 8 komplementären Profilierung 9 in Form einer Ringnut in Eingriff gebracht wird, so daß sich zusätzlich eine Art Labyrinthdichtung im Bereich der miteinander verschweißten Flächen 10 und 11 der Teile 1 und 2 ergibt.

Der thermoplastische Kunststoff des Teils 1 kann eine Verstärkung aus Fasern, zum Beispiel Glasfasern, Kohlefasern oder Metallfasern, aufweisen. Auch die Teile 2 und 3 oder nur einer der beiden Teile 2 und 3 können bzw. kann eine Verstärkung aus den genannten Fasern aufweisen. Die Teile 1 und 2 sollten darüber hinaus diffusionsdicht sein, während der Teil 3 eine höhere Festigkeit, Schlagzähigkeit oder elektrische Leitfähigkeit haben sollte.

Wenn die beiden Teile 1 und 2 nicht miteinander verschweißt werden, sondern nur formschlüssig, zum Beispiel durch eine Schnappverbindung, eine Schraubverbindung oder einen Bajonettverschluß, verbunden werden, brauchen ihre Kunststoffe nicht verschweißbar zu sein, das heißt, sie müssen dann nicht gleich und auch hinsichtlich ihrer Verschweißbarkeit nicht kompatibel sein.

Das Ausführungsbeispiel des erfindungsgemäßen Rohrstutzens nach Fig. 2 unterscheidet sich von dem nach Fig. 1 hinsichtlich der Form insofern, als der Teil 1 nach Fig. 2 eine etwas dünnere Wand als der Teil 1 nach Fig. 1 aufweist und innen mit einer zusätzlichen Schicht 1a ausgekleidet ist. Der Teil 2a hat keine den Teil 3 durchsetzende Innenwand wie der Teil 2 nach Fig. 1. Statt dessen ragt die Schicht 1a aus der dem Teil 2a zugekehrten Seite des Teils 1 so weit heraus, daß sie im verbundenen Zustand der Teile 1 und 2a durch die Teile 2a und 3 hindurch bis in die Öffnung 5 des Bauteils 6 ragt und dabei die radial inneren Seiten der Teile 2a und 3 abdeckt. Hierbei können der erste Teil 1 und die Schicht 1a aus Materialien mit unterschiedlichen Eigenschaften, insbesondere hinsichtlich ihrer Festigkeit, Schlagzähigkeit und Kriechneigung, hergestellt werden, wobei der erste Teil 1 und/oder die Schicht 1a diffusionsdicht ausgebildet werden, so daß das durch den Stutzen hindurchgeleitete Fluid, wie Benzin oder Dieselöl, nicht durch den Stutzen nach außen diffundieren kann. Wenn die Schicht 1a eine entsprechend hohe Festigkeit, Schlagzähigkeit und Diffusionsdichtigkeit sowie geringe Kriechneigung aufweist, dann ist man freier in der Wahl der Materialien der Teile 1, 2a und 3, nur daß der Teil 2a weiterhin mit dem Teil 1 und dem Teil 3 und der Teil 3 mit dem Bauteil 6 verschweißbar sein müßten, wobei auf die Verschweißbarkeit der Teile 1 und 2a auch verzichtet werden könnte, wenn sie lediglich formschlüssig miteinander verbunden werden. Ein für diesen Zweck besonders geeignetes Material der Schicht 1a wäre ein Metall, das hinsichtlich des hindurchzuleitenden Fluids nicht nur diffusionsdicht, sondern auch korrosionsfest ist.

Die Schicht 1a kann aber auch aus einem Kunststoff hergestellt sein, der zumindest teilweise die gestellten Anforderungen an die Festigkeit, Schlagzähigkeit, Kriechneigung und Diffusionsdichtigkeit erfüllt, soweit diese nicht durch die Teile 1, 2a erfüllt werden. Zu diesem Zweck kann der Kunststoff der Schicht 1a auch eine Verstärkung aus den erwähnten Fasern aufweisen.

Der Teil 1 kann ebenso wie bei dem ersten Ausführungsbeispiel und dementsprechend die Schicht 1a die unterschiedlichsten Formen aufweisen. Das Formen erfolgt dann im wesentlichen ebenso wie bei dem ersten Ausführungsbeispiel nach Fig. 1, das heißt die Teile 2a und 3 werden in einem eigenen Formwerkzeug gespritzt und dabei miteinander verschweißt, während zur Formgebung des Teils 1 und der inneren Schicht 1a, wenn der Teil 1 und die Schicht 1a thermoplastischen Kunststoff aufweisen, in einem zweiten Formwerkzeug gemeinsam im Mehrkomponenten-Spritzgußverfahren hergestellt werden, dagegen bei Ausbildung der Schicht 1a aus Metall zunächst die Schicht 1a geformt und dann in demselben Formwerkzeug mit dem Material des Teils 1 umspritzt wird.

Man benötigt daher auch in diesem Falle zur Formung des aus den Teilen 2a und 3 bestehenden Rings unabhängig von den unterschiedlichen Formen des Teils 1 und dementsprechend der Schicht 1a stets nur das gleiche Formwerkzeug, während nur für den Teil 1 und die Schicht 1a entsprechend ihrer jeweiligen Form unterschiedliche Formwerkzeuge hergestellt zu werden brauchen.

Das Ausführungsbeispiel nach Fig. 3 unterscheidet sich von dem nach Fig. 1 wiederum im wesentlichen nur durch die innere Schicht 1a des Teils 1, die in diesem Fall jedoch nicht durch die Teile 2 und 3 hindurchragt, sondern mit ihrem unteren Ende etwa bündig mit der unteren Fläche der Rippe 8 ist, und dadurch, daß der Teil 2 an seinem radial inneren Rand mit einer Aussparung versehen ist, in der eine Dichtung 12 in Form eines O-Rings aus diffusionsdichtem Material angeordnet ist. Die untere Stirnfläche der Schicht 1a ist der Dichtung 12 zugekehrt, so daß die Dichtung 12 nach dem Verbinden, das heißt Verschweißen und/oder einer Formschlußverbindung der Teile 1 und 2, diese Verbindung zusätzlich oder allein abdichtet.

Hinsichtlich der Auswahl der Materialien der Teile 1, 2 und 3 sowie der Schicht 1a und der Art der Formgebung in separaten Formwerkzeugen gilt das gleiche wie bei dem zweiten Ausführungsbeispiel nach Fig. 2.

Das vierte Ausführungsbeispiel nach Fig. 4 unterscheidet sich von dem nach Fig. 3 lediglich dadurch, daß die Dichtung 12 in einer Ringnut in der radial inneren Seite des Teils 2 angeordnet ist und die Schicht 1a an ihrem unteren Ende mit einem schurzartigen Fortsatz 13 versehen ist, der in zusammengesetztem Zustand des Stutzens in den Teil 2 ragt und zusammen mit der Dichtung 12 für eine gegebenenfalls zusätzliche Abdichtung der Verbindung der Teile 1 und 2 sorgt.

Das fünfte Ausführungsbeispiel nach Fig. 5 unterscheidet sich von dem dritten Ausführungsbeispiel nach Fig. 3 dadurch, daß zwischen dem Teil 1 und der inneren Schicht 1a eine weitere Schicht 1b ausgebildet ist. Hierbei können der Teil 1 und die Schicht 1a im wesentlichen thermoplastischen Kunststoff aufweisen und die mittlere Schicht 1b aus Metall bestehen. Es ist aber auch möglich, daß die innere Schicht 1a ebenfalls aus Metall besteht.

Alternativ können die Schichten 1a und 1b beide aus im wesentlichen thermoplastischem Kunststoff bestehen und gemeinsam den gestellten Anforderungen genügen, soweit sie nicht durch das Material des Teils 1 erfüllt werden.

Im Falle der Ausbildung des Teils 1 und der Schichten 1a und 1b aus im wesentlichen thermoplastischem Kunststoff können sie gemeinsam in einem Formwerkzeug im Mehrkomponenten-, Sandwich-, Monosandwich-, Koinjektions- oder Gegentakt-Spritzgußverfahren hergestellt werden. Bei der Herstellung im Sandwich- oder Monosandwich-Spritzgußverfahren bestehen der Teil 1 und die Schicht 1a aus dem gleichen Material. Gegebenenfalls können der Teil 1 und die Schichten 1a und 1b auch unterschiedliche Materialien aufweisen, die gemeinsam allen Anforderungen hinsichtlich Festigkeit, Schlagzähigkeit und Kriechneigung sowie Diffusionsdichtigkeit genügen.

Auch in diesem Fall werden mithin der aus dem Teil 1 und den Schichten 1a, 1b bestehende Stutzenabschnitt sowie der aus den Teilen 2 und 3 bestehende Ring jeweils in einem eigenen Formwerkzeug geformt und danach außerhalb der Formwerkzeuge miteinander verbunden, das heißt verschweißt und/oder formschlüssig verbunden.

Das Ausführungsbeispiel nach Fig. 6 unterscheidet sich von dem nach Fig. 5 lediglich dadurch, daß der dritte Teil 3 etwas dünner ausgebildet und auf seiner dem zweiten Teil 2 abgekehrten Seite mit einem vierten Teil 14 verschweißt worden ist, der thermoplastischen Kunststoff aufweist, der mit dem des Bauteils 6 eine Schweißverbindung eingeht und eine höhere Spannungsrißbeständigkeit als der dritte Teil 3 hat. Hierbei hat das Material des vierten Teils 14 eine höhere Dichte und Viskosität als das des dritten Teils 3. Im übrigen kann das Material des vierten Teils 14 aus den gleichen Materialien wie der dritte Teil 3 bestehen. Zusätzlich können die Teile 3 und 14 auch formschlüssig verbunden werden.

Der vierte Teil 14 kann auch bei den ersten fünf Ausführungsbeispielen vorgesehen werden und wird zusammen mit den Teilen 2, 2a und 3 in einem eigenen Formwerkzeug gespritzt.

Es ist aber auch möglich, bei den Ausführungsbeispielen nach den Fig. 5 und 6 die Teile 2, 3 und 14 sowie die Dichtung 12 und gegebenenfalls die Rippe 8 wegzulassen, wobei dann lediglich der äußere Teil 1 und die Schichten 1a, 1b den Stutzen aus im wesentlichen thermoplastischem Kunststoff bilden. Der Stutzen kann dann auf einfache Weise im Spritzgußverfahren, vorzugsweise im Sandwich-, Monosandwich-, Gegentakt- oder Koinjektions-Spritzgußverfahren, in den verschiedensten Formen hergestellt werden, wobei der äußere Teil 1 und die Schichten 1a, 1b aus Materialien mit unterschiedlichen Eigenschaften, insbesondere hinsichtlich ihrer Festigkeit, Schlagzähigkeit und Kriechneigung, hergestellt werden und der äußere Teil 1 und/oder wenigstens eine der Schichten 1a, 1b diffusionsdicht ausgebildet wird bzw. werden.

Bei allen Ausführungsbeispielen ergibt sich ein diffusionsdichter und crash-sicherer Stutzen aus unterschiedlichen Teilen und/oder Materialien für den Anschluß einer Fluidleitung an das Bauteil 6, insbesondere einen Kraftfahrzeug-Kraftstoffbehälter, wobei der Teil 1 und die gegebenenfalls vorgesehene(n) innere(n) Schicht(en) 1a, 1b unterschiedlichste Formen, zumindest in ihrem mit der Fluidleitung 4 zu verbindenden Abschnitt, aufweisen können und im Falle der mehrteiligen Ausbildung des Stutzens die Teile 2, 2a, 3 und 14 in allen Anwendungsfällen im wesentlichen gleich bleiben können, insbesondere rotationssymmetrisch. Dadurch ergibt sich eine erhebliche Kostensenkung gegenüber einem Formwerkzeug, in dem alle Teile gleichzeitig geformt und aneinander angespritzt werden und das für alle unterschiedlichen Formen des Teils 1 als Ganzes völlig neu konstruiert werden müßte.

## Patentansprüche

1. Verfahren zur Herstellung eines Stutzens aus unterschiedlichen Teilen (1; 2, 2a, 3; 14) zum Verbinden einer Fluidleitung (4) mit einer Öffnung (5) eines Bauteils(6), das thermoplastischen Kunststoff aufweist, wobei ein erster Teil (1) des Stutzens aus im wesentlichen thermoplastischem Kunststoff geformt wird, wobei ein zweiter Teil (2; 2a) und ein dritter Teil (3) des Stutzens aus jeweils im wesentlichen thermoplastischem Kunststoff geformt und dabei miteinander verschweißt werden, wobei der erste Teil (1) und der zweite Teil (2; 2a) miteinander fluiddicht verbunden werden und wobei das Material des dritten Teils (3) so gewählt wird, daß es auch mit dem Material des Bauteils (6) eine Schweißverbindung eingeht, **dadurch gekennzeichnet, daß** der erste Teil (1) und der zweite Teil (2; 2a) des Stutzens außerhalb eines Formwerkzeugs miteinander verbunden werden.

2. Verfahren nach Anspruch 1, **dadurch gekennzeichnet, daß** der erste und der zweite Teil (1; 2, 2a) stoffschlüssig verbunden werden.

3. Verfahren nach Anspruch 2, **dadurch gekennzeichnet, daß** der erste und der zweite Teil (1; 2, 2a) verschweißt werden.

4. Verfahren nach einem der Ansprüche 1 bis 3, **dadurch gekennzeichnet, daß** der erste und der zweite Teil (1; 2, 2a) formschlüssig verbunden werden.

5. Verfahren nach einem der Ansprüche 1 bis 4, **dadurch gekennzeichnet, daß** die zu verbindenden Flächen (10, 11) des ersten und des zweiten Teils (1; 2, 2a) vor dem Verbinden profiliert werden, so daß sie ineinandergreifen.

6. Verfahren nach einem der Ansprüche 1 bis 5, **dadurch gekennzeichnet, daß** in einer Ebene zwischen den zu verbindenden Flächen (10, 11) des ersten und des zweiten Teils (1; 2, 2a) eine Dichtung (12) vorgesehen wird.

7. Verfahren nach einem der Ansprüche 1 bis 6, **dadurch gekennzeichnet, daß** der zweite Teil (2) durch den dritten Teil (3), bis über dessen dem Bauteil (6) zugekehrte Seite hinaus, durchgehend geformt wird.

8. Verfahren nach einem der Ansprüche 1 bis 7, **dadurch gekennzeichnet, daß** wenigstens der zweite Teil (2; 2a) und der dritte Teil (3) diffusionsdicht ausgebildet werden.

9. Verfahren nach einem der Ansprüche 1 bis 8, **dadurch gekennzeichnet, daß** der erste Teil (1) mit wenigstens einer Schicht (1a; 1b) versehen wird und der erste Teil (1) und die Schicht(en) (1a; 1b) aus Materialien mit unterschiedlichen Eigenschaften, insbesondere hinsichtlich ihrer Festigkeit, Schlagzähigkeit und Kriechneigung, hergestellt werden, wobei der erste Teil (1) und/oder die Schichten (1a; 1b) oder eine der Schichten (1a; 1b)diffusionsdicht ausgebildet werden.

10. Verfahren nach einem der Ansprüche 1 bis 9, **dadurch gekennzeichnet, daß** der erste Teil (1) mit wenigstens einer Schicht (1a; 1b) aus Metall versehen wird.

11. Verfahren nach Anspruch 9, **dadurch gekennzeichnet, daß** wenigstens die eine Schicht (1a; 1b) Kunststoff aufweist und der erste Teil (1) und/oder wenigstens die eine Schicht (1a; 1b) mit einer Verstärkung versehen wird (werden).

12. Verfahren nach Anspruch 9 oder 10, **dadurch gekennzeichnet, daß** die Schichten (1a; 1b) auf der Innenseite des ersten Teils (1) und bis über die axiale Länge des zweiten und dritten Teils (2a; 3) hinaus auch auf der Innenseite des zweiten Teils (2a) ausgebildet wird (werden).

13. Verfahren nach einem der Ansprüche 1 bis 12, **dadurch gekennzeichnet, daß** der zweite und der dritte Teil (2, 2a; 3) rotationssymmetrisch in einem gemeinsamen Werkzeug gespritzt werden.

14. Verfahren nach Anspruch 9, **dadurch gekennzeichnet, daß** der erste Teil (1) und die weiteren Schichten (1a; 1b) im Mehrkomponenten- oder Sandwich-Spritzgußverfahren hergestellt werden.

15. Verfahren nach einem der Ansprüche 1 bis 14, **dadurch gekennzeichnet, daß** der dritte Teil (3) auf seiner dem zweiten Teil (2; 2a) abgekehrten Seite mit einem vierten Teil (14) verschweißt wird, der thermoplastischen Kunststoff aufweist, der mit dem des Bauteils (6) eine Schweißverbindung eingeht und eine höhere Spannungsrißbeständigkeit als der dritte Teil (3) hat.

16. Verfahren nach Anspruch 15, **dadurch gekennzeichnet, daß** das Material des vierten Teils (14) eine höhere Dichte und Viskosität als das des dritten Teils (3) hat.

17. Verfahren nach Anspruch 9, **dadurch gekennzeichnet, daß** der erste Teil (1) als äußerer Teil, die eine Schicht (1a) des Stutzens als innere Schicht (1a) und eine zweite Schicht (16) des Stutzens als Zwischenschicht (1b) im Spritzgußverfahren hergestellt werden.

18. Verfahren nach Anspruch 17, **dadurch gekennzeichnet, daß** das Spritzgußverfahren ein Monosandwich-, Gegentakt- oder Koinjektions-Spritzgußverfahren ist.

19. Verfahren nach Anspruch 17 oder 18, **dadurch gekennzeichnet, daß** wenigstens eine weitere Zwischenschicht, z.B. als Haftvermittler, vorgesehen wird.

## Claims

1. A process for producing a connecting piece comprising different parts (1; 2, 2a, 3; 14) for connecting a fluid line (4) to an opening (5) in a component (6) which has thermoplastic material, wherein a first part (2; 2a) of the connecting piece is formed from substantially thermoplastic material, wherein a second part (2; 2a) and a third part (3) of the connecting piece are respectively formed from substantially thermoplastic material and are welded to each other, wherein the first part (1) and the second part (2; 2a) are fluid-tightly connected to each other and wherein the material of the third part (3) is so selected that it also involves a welded join to the material of the component (6), **characterised in that** the first part (1) and the second part (2; 2a) of the connecting piece are connected to each other outside a moulding tool.

2. A process according to claim 1 **characterised in that** the first and the second parts (1; 2, 2a) are connected intimately in respect of their materials.

3. A process according to claim 2 **characterised in that** the first and the second parts (1; 2 2a) are welded.

4. A process according to one of claims 1 to 3 **characterised in that** the first and the second parts (1; 2, 2a) are connected in positively locking relationship.

5. A process according to one of claims 1 to 4 **characterised in that** the surfaces (10,11) to be connected of the first and second parts (1; 2, 2a) are profiled before being connected so that they engage into each other.

6. A process according to one of claims 1 to 5 **characterised in that** a seal (12) is provided in a plane between the surfaces (10, 11) of the first and second parts (1; 2, 2a) which are to be connected.

7. A process according to one of claims 1 to 6 **characterised in that** the second part (2) is shaped to pass through the third part (3) to beyond the side thereof which is towards the component (6).

8. A process according to one of claims 1 to 7 **characterised in that** at least the second part (2; 2a) and the third part (3) are of a diffusion-tight nature.

9. A process according to one of claims 1 to 8 **characterised in that** the first part (1) is provided with at least one layer (1a; 1b) and the first part (1) and the layer or layers (1a; 1b) are made from materials with different properties, in particular in respect of their strength, impact resistance and tendency to creep, wherein the first part (1) and/or the layers (1a; 1b) or one of the layers (1a; 1b) are of a diffusion-tight nature.

10. A process according to one of claims 1 to 9 **characterised in that** the first part (1) is provided with at least one layer (1a; 1b ) of metal.

11. A process according to claim 9 **characterised in that** at least the one layer (1a; 1b) has plastic material and the first part (1) and/or at least the one layer (1a; 1b) is or are provided with a reinforcement.

12. A process according to claim 9 or claim 10 **characterised in that** the layers (1a; 1b) is or are provided on the inside of the first part (1) and to beyond the axial length of the second and third parts (2a; 3) also on the inside of the second part (2a).

13. A process according to one of claims 1 to 12 **characterised in that** the second and third parts (2, 2a; 3) are rotationally symmetrically injection-moulded in a common tool.

14. A process according to claim 9 **characterised in that** the first part (1) and the further layers (1a; 1b) are produced in a multi-component or sandwich injection-moulding process.

15. A process according to one of claims 1 to 14 **characterised in that** the third part (3) is welded on its side remote from the second part (2; 2a) to a fourth part (14) which has thermoplastic material which involves a welded join to the component (6) and has a higher stress crack resistance than the third part (3).

16. A process according to claim 15 **characterised in that** the material of the fourth part (14) is of a higher density and viscosity than the third part (3).

17. A process according to claim 9 **characterised in that** the first part (1) is produced as an outer part which has a layer (1a) of the connecting piece as an inner layer (1a) and a second layer (16) of the connecting piece as an intermediate layer (1b) in an injection-moulding process.

18. A process according to claim 17 **characterised in that** the injection-moulding process is a monosandwich, counter-phase or co-injection moulding process.

19. A process according to claim 17 or claim 18 **characterised in that** there is provided at least one further intermediate layer, for example as a bonding agent.

## Revendications

1. Procédé pour fabriquer un embout constitué de différentes parties (1; 2, 2a, 3; 14) destiné à raccorder une canalisation fluidique (4) à une ouverture (5) d'un composant (6), qui comporte une matière thermoplastique, suivant lequel on forme une première partie (1) de l'embout en une matière essentiellement thermoplastique, suivant lequel on forme une seconde partie (2; 2a) et une troisième partie (3) de l'embout respectivement avec une matière essentiellement thermoplastique et on les soude entre elles, suivant lequel on relie entre elles d'une manière étanche au fluide la première partie (1) et la seconde partie (2; 2a) et suivant lequel on choisit le matériau de la troisième partie (3) de telle sorte qu'il établisse également avec le matériau du composant (6) une liaison soudée, **caractérisé en ce qu'**on relie entre elles la première partie (1) et la seconde partie (2; 2a) de l'embout à l'extérieur d'un outil de formage.

2. Procédé selon la revendication 1, **caractérisé en ce qu'**on relie entre elles les première et seconde parties (1; 2, 2a) selon une liaison par matériaux compatibles.

3. Procédé selon la revendication 2, **caractérisé en ce qu'**on soude les première et seconde parties (1; 2, 2a).

4. Procédé selon l'une des revendications 1 à 3, **caractérisé en ce qu'**on relie les première et seconde parties (1; 2, 2a) selon une liaison par formes complémentaires.

5. Procédé selon l'une des revendications 1 à 4, **caractérisé en ce qu'**on profile les surfaces à relier (10, 11) des première et seconde parties (1; 2, 2a) avant leur liaison de manière qu'elles s'engagent l'une dans l'autre.

6. Procédé selon l'une des revendications 1 à 5, **caractérisé en ce qu'**on prévoit une garniture d'étanchéité (12) dans un plan situé entre les surfaces à relier (10, 11) des première et seconde parties (1; 2, 2a).

7. Procédé selon l'une des revendications 1 à 6, **caractérisé en ce qu'**on forme la seconde partie d'une manière continue à travers la troisième partie (3) jusqu'au-delà du côté de cette partie tourné vers le composant (6).

8. Procédé selon l'une des revendications 1 à 7, **caractérisé en ce qu'**on réalise au moins la seconde partie (2; 2a) et la troisième partie (3) d'une manière étanche à la diffusion.

9. Procédé selon l'une des revendications 1 à 8, **caractérisé en ce qu'**on équipe la première partie (1) d'au moins une couche (1a; 1b) et qu'on forme la première partie (1) et la ou les couches (1a; 1b) en des matériaux ayant des caractéristiques différentes, notamment en ce qui concerne leur solidité, leur résilience et leur tendance au fluage, de telle sorte que la première partie (1) et/ou les couches (1a; 1b) ou l'une des couches (1a; 1b) sont réalisées d'une manière étanche à la diffusion.

10. Procédé selon l'une des revendications 1 à 9, **caractérisé en ce que** la première partie (1) est pourvue d'au moins une couche (1a; 1b) formée d'un métal.

11. Procédé selon la revendication 9, **caractérisé en ce qu'**au moins une couche (1a; 1b) comporte une matière plastique et **en ce que** la première partie (1) et/ou au moins une couche (1a; 1b) est (sont) pourvue(s) d'un renfort.

12. Procédé selon la revendication 9 ou 10, **caractérisé en ce qu'**on forme les couches (1a; 1b) sur le côté intérieur de la première partie (1) et jusqu'au-delà de la longueur axiale des seconde et troisième parties (2a; 3), également sur le côté intérieur de la seconde partie (2a).

13. Procédé selon l'une des revendications 1 à 12, **caractérisé en ce qu'**on moule les seconde et troisième parties (2, 2a; 3) par injection, avec symétrie de révolution, dans un outil commun.

14. Procédé selon la revendication 9, **caractérisé en ce que** la première partie (1) et les secondes couches (1a; 1b) sont réalisées selon un procédé de moulage par injection à plusieurs composants ou avec une structure sandwich.

15. Procédé selon l'une des revendications 1 à 14, **caractérisé en ce que** la troisième partie (3) est soudée sur son côté, qui est situé à l'opposé de la deuxième partie (2; 2a), à une quatrième partie (14), qui comporte une matière thermoplastique, qui est reliée selon une liaison soudée au matériau du composant (6) et possède une résistance aux déchirure par tension plus élevée que la troisième partie (3).

16. Procédé selon la revendication 15, **caractérisé en ce que** la matière de la quatrième partie (4) possède une densité et une viscosité supérieures à celles de la troisième partie (3).

17. Procédé selon la revendication 9, **caractérisé en ce que** la première partie (1) en tant que partie extérieure, une couche (la) de l'embout en tant que couche intérieure (1a) et une seconde couche (16) de l'embout en tant que couche intercalaire (1b) sont fabriquées selon le procédé de moulage par injection.

18. Procédé selon la revendication 17, **caractérisé en ce que** le procédé de moulage par injection est un procédé de moulage par injection en structure sandwich simple, en opposition de phase ou à co-injection

19. Procédé selon la revendication 17 ou 18, **caractérisé en ce qu'**il est prévu au moins une autre couche intermédiaire, par exemple en tant qu'adhésif.
